# EUROPEAN PATENT APPLICATION

(11) **EP 1 271 899 A1**
(43) Date of publication of application: **02.01.2003**
(21) Application number: 02254333.4
(22) Date of filing: 20.06.2002
(51) Int. Cl.: H04M 1/215, H04M 1/247, H04M 1/60, H04B 5/00, H04R 25/00

(54) **Cover with induction coil for a mobile telephone handset**

(30) Priority: 28.06.2001 US 892639
(71) Applicant: Nokia Corporation, 02150 Espoo (FI)
(72) Inventor: Locke, Antony, Winchester, Hampshire SO23 0HQ (GB)
(74) Representative: Johnson, Ian Michael

(57) **Abstract**

A cover for a mobile telephone handset comprises an induction coil for generating a magnetic field signal for a hearing aid having pick-up coil.

## Description

The present invention relates to a cover for a mobile telephone handset and in a particular to a cover for releasable attachment to a mobile telephone handset.

It is well-known in the art for landline telephone handsets to be supplied with a coil speaker or a coil to provide inductive coupling to hearing aids. By switching to a "tele-coil" or "T-" mode of operation, a hearing aid is able to detect a magnetic signal generated by the coil speaker or coil. The hearing aid converts the magnetic signal into an acoustic signal for the user of the hearing aid to hear. The coil speaker or coil is positioned in such a way that the handset can be held in a conventional manner. Thus, inductive coupling provides an alternative or additional way of communicating an audio signal to the user. It is especially useful when the telephone handset is being used in a noisy environment.

It is also known to supply mobile telephone handsets, which are also known as cellular telephone handsets, with an induction coil to provide inductive coupling to hearing aids. For example, US-A-5991420 describes a battery pack for a mobile telephone handset having a built-in induction coil. In another instance, EP-A-0789474 discloses a hands-free arrangement in which an induction loop is worn around a user's neck and plugged into the handset.

The present invention seeks to provide an improved inductor arrangement.

According to the present invention there is provided a cover for a mobile telephone handset comprising means for generating a magnetic field signal for a hearing aid having a pick-up coil, whereby said magnetic signal corresponds to a handset audio signal.

The cover may comprise a shell having a plurality of apertures for providing respective windows to said handset. The cover may also comprise means for driving said means for generating the magnetic field signal. The cover may comprise a connector for receiving the audio signal from the handset. The connector may be configured to engage a corresponding connector disposed on a face of said handset which the cover conceals. Alternatively, the connector may be configured to engage a corresponding connector on a face of said handset other than a face which the cover conceals.

The cover may be configured to receive power from the handset. The cover may further comprise a battery.

The cover may be for a face of the handset which provides a keypad. The cover may be for a face of the handset intended to be held towards a user's ear during communication. The cover may be configured to be releasably attachable to the handset.

The magnetic field may be generated as said audio signal is provided by the handset.

The cover may be configured to cause the handset not to transmit audio. This has the advantage of saving power.

According to the present invention there is also provided apparatus comprising a mobile telephone handset and a cover for said mobile telephone handset comprising means for generating a magnetic field signal for a hearing aid having a pick-up coil, whereby said magnetic signal corresponds to a handset audio signal. The handset may not transmit audio when said cover is attached to said handset. The magnetic field signal may be generated as said audio signal is provided by said handset.

According to the present invention there is still further provided a cover for an electronic device comprising means for generating a magnetic field signal for a hearing aid having a pick-up coil, whereby said magnetic signal corresponds to a device audio signal.

The means for generating the magnetic field may comprise an inductor having one or more turns. The means for generating the magnetic field may comprise an induction coil.

Embodiments of the present invention will now be described, by way of example, with reference to the following drawings, in which:-
Figure 1 shows an exploded perspective view of a mobile telephone handset;
Figure 2 is a schematic diagram of telephony circuits of a mobile telephone handset;
Figure 3 is a plan view of inside a cover according to the present invention;
Figure 4 is a circuit diagram of an amplifier circuit for driving an induction coil;
Figure 5 is a cross-section of part of the a cover and part of a mobile telephone handset;
Figure 6 is a perspective view of part of another cover according to the present invention and
Figure 7 is a perspective view of part of yet another cover according to the present invention.

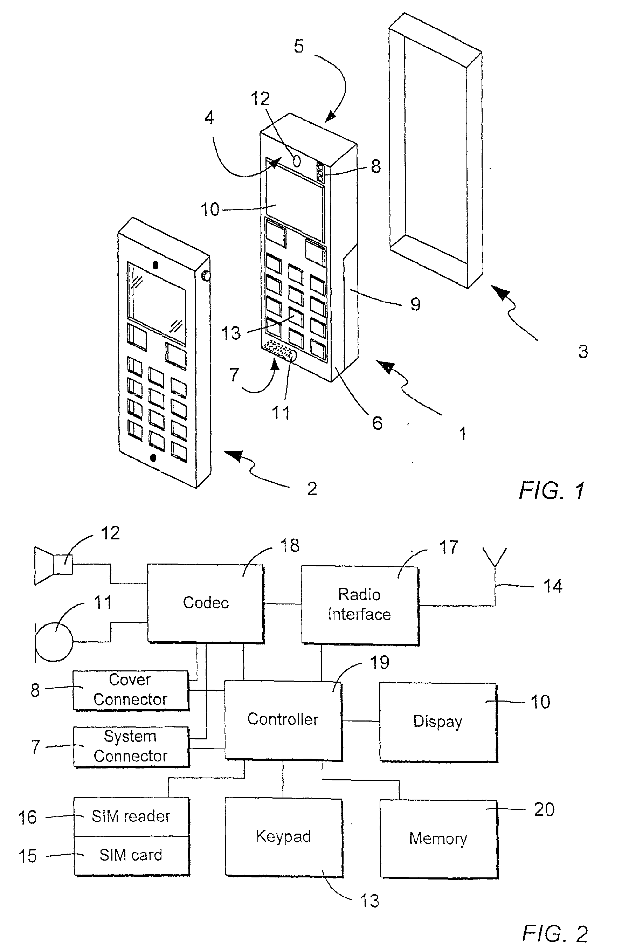

Referring to Figure 1, a mobile telephone handset 1 is provided with front and back covers 2, 3 which cover front and back faces 4, 5 of the handset 1. The front and back covers 2, 3 are releasably attachable to the front and back faces 4, 5 and are secured by deformable catches (not shown) in a well-known manner. It will be appreciated that the front and back covers 2, 3 need not totally encase the handset 1. For example, further covers may be provided which are integrally formed with the handset 1. Furthermore, the handset 1 may be provided such that only the front cover 2 is releasably attachable. Moreover, the front and back covers 2, 3 may be releasably attachable to each over, rather than to the handset itself.

Referring also to Figure 2, the handset 1 houses a circuit board 6, a system connector 7, a cover connector 8, a battery 9, a liquid crystal display (LCD) panel 10, a microphone 11, a speaker 12, a keypad 13, an internal antenna 14, a subscriber identification module (SIM) card 15 and a SIM card reader 16. The circuit board 6 carries mobile telephone circuitry including a radio interface 17, a coder/decoder 18, a controller 19 and memory 20. The circuit board 6 is connected to the system connector 7 which permits expansion of mobile telephone handset functionality, such as connection of a hands-free communication kit. The circuit board 6 is also connected to a cover connector 8, which is similar to the system connector 7 and whose function is described in more detail hereinafter.

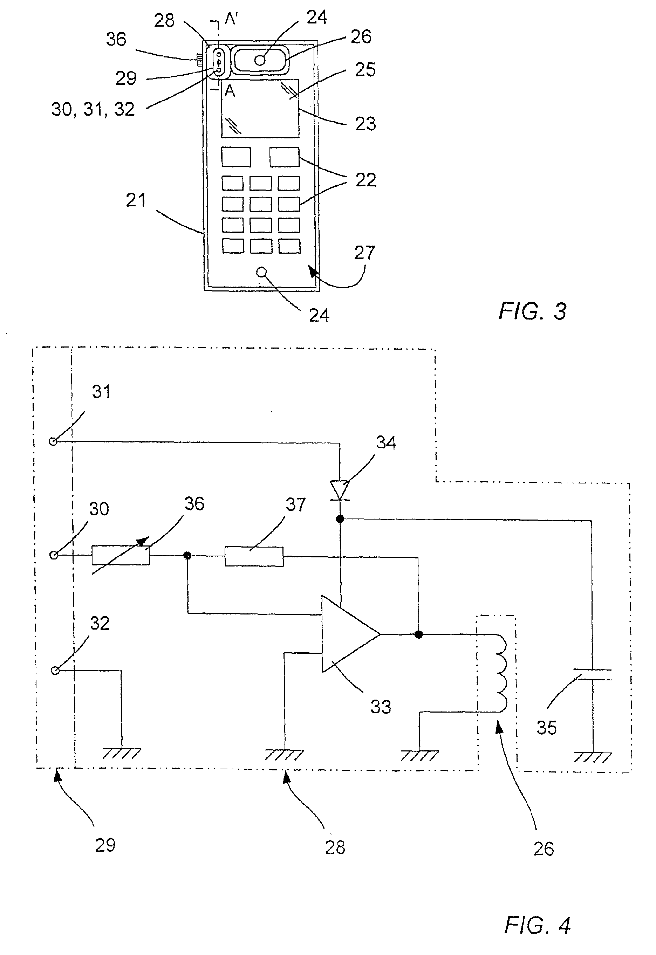

Referring to Figure 3, the front cover 2 comprises an injected-moulded shell 21 formed of a plastics material, such as acrylonitrile butadiene styrene, and provided with a plurality of apertures 22, 23, 24. When the front cover 2 is attached to the front face 4 of the handset 1, the apertures 22, 23, 24 are aligned with components provided on the front face 4, such as the LCD panel 10 and the keypad 13. Thus, the keypad 13 projects through keypad apertures 22 and so allows the user to operate the keypad 13. A display aperture 23 is positioned over the LCD panel 10 and is provided with a clear plastics window 25 to permit the LCD panel 10 to be viewed. Microphone and speaker apertures 24 sit over the microphone 11 and speaker 12 respectively. These apertures 24 facilitate passage of acoustic signals through the front cover 2.

The front cover 2 also comprises an induction coil 26 for generating a magnetic field signal for a hearing aid (not shown) which is provided with a pick-up coil. Such a hearing aid is well-known in the art. The pick-up coil is used to enable the hearing aid to operate in a "tele-coil" or "T-" mode. An example of a T-mode compatible hearing aid is an Oticon Personic 440.

The induction coil 26 comprises a plurality of turns of wire, such as enamelled copper, encased in plastics material. The induction coil 26 is mounted to a handset-facing surface 27 of the front cover 2 and is centred about the speaker aperture 24. The number of turns of wire, the gauge of the wire, the area of the coil and the arrangement of the coil in order to generate a sufficient magnetic field can be determined by routine experimental methods. Preferably, for a -10dbV signal at 1kHz, a minimum axial magnetic field should be -22dBA/m and a minimum radial field should be -27dBA/m. The resistance of the coil is typically about 30Ω. However, it will be appreciated that other design criteria may be used.

The front cover 2 also comprises an amplifier circuit 28 for driving the induction coil 26 and a connector 29 for engaging the cover connector 8 and receiving an audio signal from the coder/decoder 18 and power from the battery 9. The amplifier circuit 28 is mounted to the handset-facing surface 27 of the front cover 2 next to the induction coil 26. The connector 29 comprises first, second and third pins 30, 31, 32. The first pin 30 is for receiving the audio signal which is usually referred to as a transmitted audio signal XEAR. The second pin 31 is for receiving a supply voltage VDC. The third pin 32 for connection to ground GND. The front cover 2 may be provided with an additional battery for powering the amplifier circuit 28 and the induction coil 26.

Referring to Figure 4, the amplifier circuit 28 comprises an operational amplifier 33, such as an LM 386, powered by the supply voltage VDC through a diode 34 and connected to ground GND. The supply voltage VDC is stabilised by a capacitor 35. In this example, the capacitor has a value of 0.05µF. The transmitted audio signal XEAR is channelled into the input of the operational amplifier 33 through a variable resistor 36 which provides gain control. In this example, the variable resistor has a maximum value of 5kΩ. A resistor 37 connects the input and output of the operational amplifier 33. In this example the resistor 37 has a value of 5kΩ. The amplifier circuit 28 may be modified in many ways. For example, a different operational amplifier 33 may be used and the electrical components 35, 36, 37 may have different values. The variable resistor may be controlled by the handset 1 using a control line provided through an additional pin (not shown) of the connector 29. Furthermore, a control circuit may also be provided for switching on and off the amplifier circuit 33. The control circuit may also provide a control signal to the handset 1 via another additional pin (not shown) to cause the handset not to transmit audio using the speaker 12 (Figures 1 and 2) when the cover is attached to the handset. Alternatively, the cover may be provided with an element, such as a pin or rod, which engages an electro-mechanical switch (not shown) on the handset. Other amplifier circuits may be used which provide amplification of the audio signal.

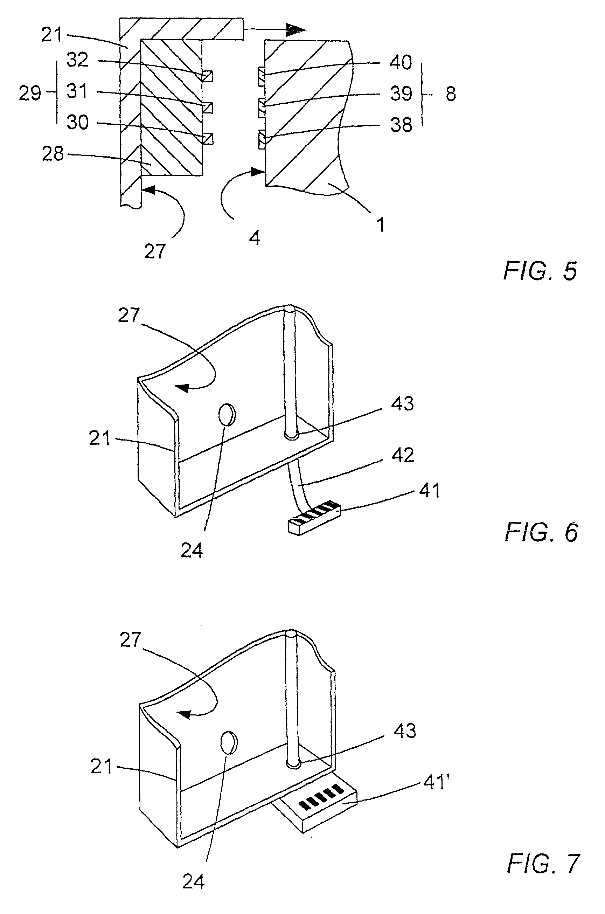

Referring also to Figure 5, the pins 30, 31, 32 of the connector 29 depend from the handset-facing surface 27 and are positioned to engage first, second and third pads 38, 39, 40 of the cover connector 8 disposed on the handset 1. Thus, when the front cover 2 is attached to the front face 4 of the handset 1, the pins 30, 31, 32 of the connector 29 press against the pads 38, 39, 40 of the cover connector 8. Therefore, when the front cover 2 is attached to the handset 1, the induction coil 26, the amplifier circuit 28 and connector 29 is electrically connected to the handset 1. Moreover, the connector 29 is hidden.

The controller 19 is configured to detect when the front cover 2 is attached, for example by measuring the bias of the second pad 39 which supplies VDC. The controller 19 can modify operation of the handset 1 accordingly, such as permitting the user to control gain of the amplifier 28.

The invention has several advantages. A large proportion of the population do not suffer from impaired hearing. Therefore, they do not wear a hearing aid and do not require a mobile telephone handset having an induction loop. The invention allows standard handsets to be sold without substantial modification. If a user does require inductive coupling, then they simply remove any existing front cover from a handset, if one is in place, and attach a front cover according to the present invention. Furthermore, front covers are perceived by the public to be a style or fashion item. Users can attach covers which reflect their tastes and personalities. Users of hearing aids can engage in such an activity and so minimise their own -and society's- negative perception of hearing impairment.

Referring to Figure 6, the connector 29 may be replaced by an alternative connector 41 for connection with the system connector 7. As shown in Figure 1, the system connector 7 is not located on the front face 4 but on a face underneath. The alternative connector 41 is connected to the amplifier circuit 28 by means of a flexible cable 42 which passes through a connector aperture 43 in the cover 2. The front cover 2 is attached to the front face 4 of the handset 1 and the alternative connector 41 is inserted into the system connector 7. In this arrangement, the cover connector 8 is not needed and can be omitted.

Referring to Figure 7, the alternative connector 41 may be integrally formed with the front cover 2 to form a rigid connector 41'. The rigid connector 41' is arranged such that when the front cover 2 is attached to the front face 4 of the handset 1, it engages the system connector 7.

It will be appreciated that many modifications may be made to the embodiments described above. For example, any portable handheld electronic device which has interchangeable cover and which generates an audio signal, for example a radio or a music player, can use the cover with an induction loop.

## Claims

1. A cover for a mobile telephone handset (1) comprising means (26) for generating a magnetic field signal for a hearing aid having a pick-up coil, whereby said magnetic signal corresponds to a handset audio signal.

2. A cover according to claim 1, comprising a shell (21) having a plurality of apertures (22, 23, 24) for providing respective windows to said handset.

3. A cover according to claim 1 or 2, comprising means (28) for driving said means (26) for generating said magnetic field signal.

4. A cover according to any preceding claim, comprising a connector (29) for receiving the audio signal from said handset.

5. A cover according to claim 4, wherein said connector (29) is configured to engage a corresponding connector (8) disposed on a face (4) of said handset which the cover conceals.

6. A cover according to claim 4, wherein said connector (29) is configured to engage a corresponding connector (41; 41') on a face of said handset other than a face which the cover conceals.

7. A cover according to any preceding claim, wherein the cover is for a face (29) of said handset which provides a keypad (13).

8. A cover according to any preceding claim, wherein the cover is for a face of said handset intended to be held towards a user's ear during communication.

9. A cover according to any preceding claim, which is configured to receive power from said handset.

10. A cover according to any preceding claim, further comprising a battery.

11. A cover according to any preceding claim, configured to be releasably attachable to said handset.

12. A cover according to any preceding claim, wherein said magnetic field signal is generated as said audio signal is provided by said handset.

13. A cover according to any preceding claim, configured to cause said handset not to transmit audio.

14. A cover for an electronic device comprising means (26) for generating a magnetic field signal for a hearing aid having a pick-up coil, whereby said magnetic signal corresponds to a device audio signal.

15. Apparatus comprising:
a mobile telephone handset (1) and
a cover (2) for said mobile telephone handset comprising means (26) for generating a magnetic field signal for a hearing aid having a pick-up coil, whereby said magnetic signal corresponds to a handset audio signal.

16. Apparatus according to claim 15, wherein said handset does not transmit audio when said cover is attached to said handset.

17. Apparatus according to claim 15 or 16, wherein said magnetic field signal is generated as said audio signal is provided by said handset.

18. A cover or apparatus according to any preceding claim, wherein said means (26) for generating a magnetic field signal comprises an inductor having one or more turns.

19. A cover or apparatus according to any preceding claim, wherein said means (26) for generating a magnetic field signal comprises an induction coil.
